# EUROPEAN PATENT APPLICATION

(11) **EP 2 902 228 A1**
(43) Date of publication of application: **05.08.2015**
(21) Application number: 15153181.1
(22) Date of filing: 30.01.2015
(51) Int. Cl.: B60J 5/06

(54) **Closing system**

(30) Priority: 03.02.2014 BE 201400058
(71) Applicant: Versus Invest BVBA, 3660 Opglabbeek (BE)
(72) Inventor: Rogiers, Erik Ronny Felix, 3850 Kozen (BE)
(74) Representative: Philippaerts, Yannick

(57) **Abstract**

System for closing a side wall of a loading space by means of a tarpaulin suspended from carriages, which system has a reinforcing line which is connected to the tarpaulin such that a relative movement of the reinforcing line relative to the tarpaulin is only possible in the longitudinal direction of the reinforcing line, wherein the reinforcing line is placed substantially parallel to a rail and is connected to two lateral supports so that the reinforcing line is tensionable together with the tarpaulin between the lateral supports, wherein the reinforcing line is positioned at a height located above a lower edge of the support beam.

## Description

The invention relates to a system for closing a side wall of a loading space. Such suspension systems typically comprise a support beam provided with rails in which carriages with wheels can roll. The tarpaulin is attached to these carriages. The tarpaulin is tensioned in the closed position between two lateral supports.

Loading spaces enclosed by load containers, in particular mobile load containers situated on trucks and/or trains, must comply with predetermined maximum outer dimensions. These outer dimensions are often imposed by law. These prescribed maximum dimensions limit the loading space, this being the space effectively available inside the load container. Sides of such loading spaces are often closed off with a tarpaulin which can be slid open in order to thus provide access to the loading space via the relevant side. In order to obtain maximum loading space the tarpaulin is attached to an outermost peripheral edge of the load container.

The tarpaulin is typically suspended from carriages which can roll over tracks in rails present in a support beam. The support beam is therefore also referred to as guide beam. The carriages bear the tarpaulin and are themselves supported by the support beam. The carriages allow sliding open of the tarpaulin by rolling the carriages over the rails to one end of the support beam in the longitudinal direction of the support beam. The tarpaulin is typically rectangular and in a suspended position has an upper edge, a lower edge and two upright side edges. At the upper edge the tarpaulin is attached to the carriers which roll in the support beam so that the tarpaulin is suspended. At the lower edge the tarpaulin can likewise be attached to carriages which roll in a further support beam at the position of the lower edge in order to thus guide the tarpaulin on the underside. The tarpaulin can alternatively be provided on its lower edge with closing elements such as buckles with which the tarpaulin can be closed at the position of the lower edge. Lateral supports are preferably provided on the tarpaulin at the upright side edges, which supports can likewise be guided via the guide beam of the loading space. A tensioning mechanism is provided on at least one of the lateral supports so that the tarpaulin can be tensioned between the two supports.

Recent legislation relating to loading spaces, in particular trucks, requires that the loading space be designed such that it is not possible to enter or break into the loading space without leaving visible damage. Modifications have for this purpose been made at different locations in the loading space so that break-ins always result in visible damage.

A drawback of the known system for closing a side wall of a loading space via a tarpaulin is that an intruder can pull open the tarpaulin between two adjacent carriages of the suspension system and thus enter the loading space. This pulling open of the tarpaulin leaves no visible damage.

The present invention has for its object to provide a suspension system wherein gaining access to the loading space without leaving visible damage is made more difficult.

The invention provides for this purpose a system for closing a side wall of a loading space, which system comprises a support beam which is provided with at least one rail, the system further comprising carriages which are each provided with wheels which are placed so as to roll in the at least one rail, wherein a tarpaulin for closing the side wall is attached to the carriages via fastening means, wherein in closed state the tarpaulin is held fixedly between two lateral supports, wherein a tensioning mechanism is provided at least on one of the lateral supports for tensioning the tarpaulin between the lateral supports, characterized in that a reinforcing line is connected to the tarpaulin such that a relative movement of the reinforcing line relative to the tarpaulin is only possible in the longitudinal direction of the reinforcing line, wherein the reinforcing line is placed substantially parallel to the rail and is connected to the two lateral supports so that the reinforcing line is tensionable together with the tarpaulin between the supports, wherein the reinforcing line is positioned at a height located above a lower edge of the support beam.

The system according to the invention comprises a reinforcing line which is connected to the tarpaulin and which is tensioned between the lateral supports. The reinforcing line is hereby tensioned firmly between the two lateral supports. Because this reinforcing line is connected to the tarpaulin, the tarpaulin is also further tensioned via tensioning of the reinforcing line. It will be apparent here that the tarpaulin is tensioned in a conventional manner via the tensioning mechanism and that the reinforcing line forms an additional safeguard. Because the reinforcing line is placed above the lower edge of the support beam, the reinforcing line will be tensioned between the lateral supports and substantially against (or in any case very close to) the support beam. The reinforcing life is connected to the tarpaulin such that a relative movement of the reinforcing line relative to the tarpaulin is only possible in the longitudinal direction of the reinforcing line. This means that, while the reinforcing line can move in its longitudinal direction relative to the tarpaulin, the reinforcing line is positioned substantially fixedly relative to the tarpaulin in the directions transversely of this longitudinal direction. The tarpaulin can thus make no movement (in a direction transversely of the reinforcing line) away from the reinforcing line. Because the reinforcing line is tensioned roughly against the support beam, at the position of the support beam the tarpaulin will also be positioned appreciably more firmly relative to the support beam. Where conventionally the tarpaulin could be pulled away against carriages by exerting a force on the tarpaulin counter to the tensioning force of the tarpaulin, a force will now be exerted counter to the tensioning force of the tarpaulin and counter to the tensioning force of the reinforcing line. Because the reinforcing line and the tarpaulin are movable relative to each other in the longitudinal direction of the reinforcing line, the closing force of the tarpaulin is combined with the closing force of the reinforcing line. Tests have demonstrated that such a free movement of the reinforcing line relative to the tarpaulin in the longitudinal direction of the reinforcing line results in an appreciably better resistance to opening of the upper part of the tarpaulin. It hereby becomes impossible with a system according to the invention to pull the upper part of the tarpaulin away from the support beam between two adjacent carriages and thus gain access to the loading space.

The reinforcing line is preferably positioned at a height located below said fastening means. Opening of the tarpaulin is greatly simplified by placing the reinforcing line below the fastening means. This is because the carriages are typically covered by a rubber flap. An upper side of this rubber flap is connected to the support beam. When the tarpaulin is opened and moves open in the manner of a concertina, the reinforcing line will also move in concertina form with the tarpaulin. This is because the reinforcing line is connected to the tarpaulin such that only a movement in the longitudinal direction of the reinforcing line is allowed. Folding open and pleating of the tarpaulin in concertina form will typically bring about little or no relative movement of the reinforcing line relative to the tarpaulin in the longitudinal direction of the reinforcing line. The reinforcing line will therefore also fold in concertina form together with the tarpaulin. The reinforcing line will however provide an additional resistance to the concertina form of the tarpaulin. This resistance is increased by the rubber flap covering the tarpaulin on the upper side. The higher the reinforcing line pushes against the flap, the greater the resistance to folding open of the tarpaulin. It will therefore be advantageous to position the reinforcing line below the fastening means, i.e. at a height substantially located below the height of the carriages. This has the result that the reinforcing line pushes against an underside of the rubber flap, this underside being appreciably more flexible than the upper side of the rubber flap (because the upper side of the rubber flap is connected to the support beam).

Preferably provided on the support beam is a rubber cover which is connected above the carriages to the support beam and which extends over the carriages in order to protect them from wind and rain. In addition to protecting from wind and rain, this rubber cover will make further access to the loading space via an opening between adjacent carriages more difficult.

The carriages are preferably placed with a spacing which is a maximum of four times greater than the distance between the fastening means and the underside of the support beam. Tests have demonstrated that intrusion into a loading space wherein the above ratio is respected is appreciably more difficult than in the case of a system where the above ratio is not respected.

The reinforcing line is preferably formed from a material and with a cross-section such that the tensioned reinforcing line allows appreciably less elastic deformation than the tensioned tarpaulin.

When the tarpaulin is pulled away from the support beam between two adjacent carriages, the extent to which this is possible (i.e. the size of the thus created opening) will depend on the elastic deformability of the tarpaulin and on the elastic deformability of the reinforcing line. The elastic deformability of the tarpaulin is difficult to influence, whereby reinforcement of the system for closing the loading space by means of reinforcing the tarpaulin is difficult. The system for closing the loading space can be reinforced in simple manner by increasing the cross-section of the reinforcing line or by manufacturing the reinforcing line from a material having a lower elastic deformability. An appreciable improvement in the closure is obtained by manufacturing the reinforcing line from a material and with a cross-section which is such that the reinforcing line allows less elastic deformation than the tensioned tarpaulin. The reinforcing line is preferably manufactured from a material having an elastic deformability of less than half the elastic deformability of the tarpaulin. This allows tensioning of the reinforcing line to be simplified. This is because, when a reinforcing line and a tarpaulin are placed such that the tarpaulin and the reinforcing line have an equal length in unloaded state (non-tensioned state), tensioning of the tarpaulin and of the reinforcing line via the tensioning mechanism (wherein the tensioning mechanism is assumed to pull an equal distance on the tarpaulin and on the reinforcing line) will have the result that an appreciably higher tensioning force is exerted on the reinforcing line than on the tarpaulin. The tarpaulin can hereby be closed in simple manner by an operator (because the length of the reinforcing line and the length of the tarpaulin are the same in unloaded state), while the reinforcing line can nevertheless be tensioned much more firmly via the tensioning mechanism than the tarpaulin, whereby the closing system closes considerably better.

The reinforcing line is preferably formed from a metal or plastic material and formed as a cable or as a belt. The reinforcing line is more preferably formed as a metal cable. Alternatively, the reinforcing line is more preferably formed as a plastic belt. A belt is defined here as a winding material with an elongate cross-section. A number of tests were carried out with different types of reinforcing line during development of the invention. In a first test a steel cable was attached in the tarpaulin. This cable had a substantially round cross-section of 2 to 3 mm diameter. Such a steel cable in the tarpaulin had a positive effect on closing of the tarpaulin. In another test a plastic belt of substantially rectangular cross-section was used, wherein the rectangular cross-section had a short side and a long side. The short side had a length here of 1 to 2 mm and the long side a length of 10 to 20 mm. The results from the plastic belt were roughly the same as the results from the steel cable. The cross-sectional area of the tested cable was appreciably smaller than the cross-sectional area of the tested plastic belt. This difference in cross-sectional area compensated the differences in material property. Plastic in particular has a lower strength than steel, whereby more material was used to generate the same tensile stress. The choice of a belt (elongate cross-section) is the result of the function of the system for closing the loading space. The system for closing the loading space is particularly provided so as to slide open, wherein the tarpaulin pleats in concertina form. As described above, the reinforcing line also follows this pleating. In order to enable comfortable opening of the tarpaulin the resistance to pleating is preferably as low as possible. In order to keep this resistance to pleating low, a reinforcing line is chosen with an elongate cross-section wherein the longitudinal direction of the section is positioned upward. Since the tarpaulin will always move laterally in concertina form (because it is a side wall of a loading space), the reinforcing belt will offer minimum resistance to opening of the tarpaulin.

The tarpaulin is preferably provided with a sleeve which extends parallel to the rail and wherein the reinforcing line extends through the sleeve of the tarpaulin so that a relative movement of the reinforcing line relative to the tarpaulin is only possible in the longitudinal direction of the reinforcing line. As alternative to a sleeve, the tarpaulin can be provided with a plurality of eyelets, which plurality of eyelets are placed parallel to the rail and wherein the reinforcing line extends through the plurality of eyelets. The reinforcing line can be connected via the eyelets or via the sleeve to the tarpaulin in order to enable a relative movement of the tarpaulin relative to the reinforcing line in the longitudinal direction of the reinforcing line, while relative movements of the tarpaulin relative to the reinforcing line transversely of the longitudinal direction of the reinforcing line are not possible, or hardly so.

The reinforcing line is preferably placed on an inner side of the tarpaulin. The reinforcing line is hereby not visible, and the reinforcing line is protected from wind and weather.

The tensioning mechanism is preferably formed as a roll onto which the tarpaulin and the reinforcing line can be partially wound, wherein winding up generates tension for the purpose of tensioning the tarpaulin. Such a roll is easy to place and tensions the tarpaulin in efficient manner.

The invention further relates to the tarpaulin for application in a system according to the invention, wherein the tarpaulin is provided with a holder for fixedly holding a reinforcing line such that a relative movement of the reinforcing line relative to the tarpaulin is only possible in the longitudinal direction of the reinforcing line. The tarpaulin preferably comprises here the reinforcing line which extends in the holder. Such a tarpaulin can be applied in a conventional system for closing a side wall of a loading space in order to obtain by applying the tarpaulin a system for closing a side wall of a loading space according to the invention.

The invention will now be further described on the basis of an exemplary embodiment shown in the drawing.

In the drawing:
figure 1 is a perspective view of trailer with a trailer wall closed by a tarpaulin;
figure 2 shows a cross-section of an embodiment of a suspension system;
figure 3 is a side view of a suspension system according to an embodiment; and
figure 4 shows several embodiments of a reinforcing line and a holder on the tarpaulin.

The same or similar elements in the drawing are designated with the same reference numerals.

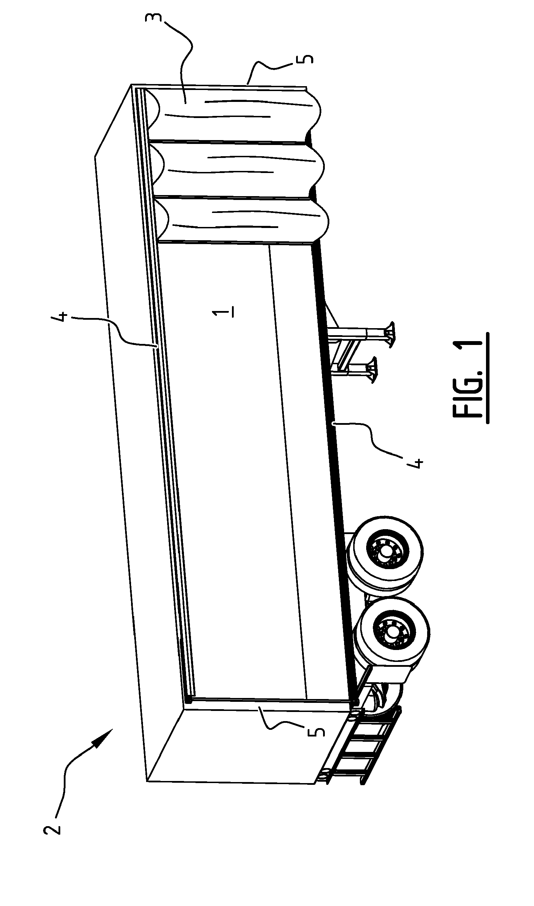

Loading spaces 1 defined by load containers 2, in particular mobile load containers, are used for transport of goods therein. Loading space 1 is defined here as the volume of space available in load container 2. Load container 2 is formed by the physical components enclosing the loading space. Such a loading container 2 is shown in figure 1 as a load container 2 with loading space 1 on a trailer for a truck (not shown). It will however be apparent that the invention is applicable not only to trailers of trucks but also to railway wagons, trucks with fixed load container and further mobile load containers with loading spaces.

Such load containers have outer dimensions typically limited by law. In Belgium an outer dimension with a maximum width of 2.55 m is thus imposed for a non-refrigerated load container of a truck. These imposed maximum outer dimensions will of course affect the maximum loading space available in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside this wall. The outer dimensions are in this way defined substantially by the wall of the loading space, this maximizing the room available in the loading space.

The wall is preferably formed by a tarpaulin 3. A tarpaulin 3 typically has a small thickness, and a tarpaulin 3 will therefore be suitable as wall of a load container 2 for closing a loading space 1 since it takes up little loading space 1. A tarpaulin 3 further has the advantage that it is flexible and, provided it is attached via a suitable suspension system, can be pushed away to one side, as illustrated on the right-hand side of the trailer of figure 1, such that the loading space becomes accessible.

Figure 1 shows a trailer wherein tarpaulin 3 is suspended from a suspension system with carriages and support beams, wherein one of the support beams 4 is located on the upper side of the tarpaulin. In such a configuration the tarpaulin can be suspended from the upper support beam via carriages. The tarpaulin is then connected to the carriages via connecting elements. A support beam 4 can also be provided on the underside. The tarpaulin can here also be guided in this support beam via carriages. The invention however relates mainly to the attachment of the tarpaulin to the upper support beam. The tarpaulin can be attached at the position of the lower support beam without carriages, for instance via buckles.

Figure 1 shows a trailer 1 of a truck wherein a side wall is closed by a tarpaulin 3. Tarpaulin 3 is provided here so as to extend in a frame (the frame of loading container 2) in order to thus close the opening defined by the frame. Here the frame preferably has a lower and an upper lying beam 4 which define the height of the opening to be closed, and two upright beams 5, one on each side of the frame, which define the width of the opening.

Tarpaulin 3 is mounted for the purpose of closing the opening of the frame. Tarpaulin 3 is suspended such that it can slide open in order to provide access to the loading space via the opening in the side wall. Several configurations are possible for this purpose. Tarpaulin 3 can be placed in the opening such that it can only slide open on one of its sides. The tarpaulin is preferably suspended from a guide beam which is placed at or integrally formed with upper beam 4. In the guide beam carriages or slide elements can move along the beam so as to thus guide the tarpaulin in an opening or closing movement. According to a first embodiment, the tarpaulin can hang loose at the position of lower beam 4 (not be guided via a second guide beam). When the tarpaulin is closed the tarpaulin is then fastened to lower beam 4 on the underside via fastening means. Practical examples of such fastening means are buckles and straps. Alternative fastening means can however also be applied. According to a second embodiment, the tarpaulin is guided at the position of lower beam 4 via a guide beam similarly to upper beam 4, wherein carriages are mounted on the underside of the tarpaulin and roll in the lower guide beam. The lower guide beam and the carriages hereby hold the tarpaulin in place at the position of lower beam 4, whereby further closing via closing means as described for the first embodiment is not necessary.

Tarpaulin 3 is preferably rectangular and has an upper edge, lower edge and two side edges (lateral edges). The upper edge is attached via guide means (carriages) to upper beam 4. One of the side walls can be connected fixedly to an upright beam 5, or both side edges of the tarpaulin can be attached to a lateral support 8, this lateral support enabling closing of the tarpaulin against an upright edge 5. Tarpaulin 3 of figure 1 will be designated in the further figures with reference numeral 9.

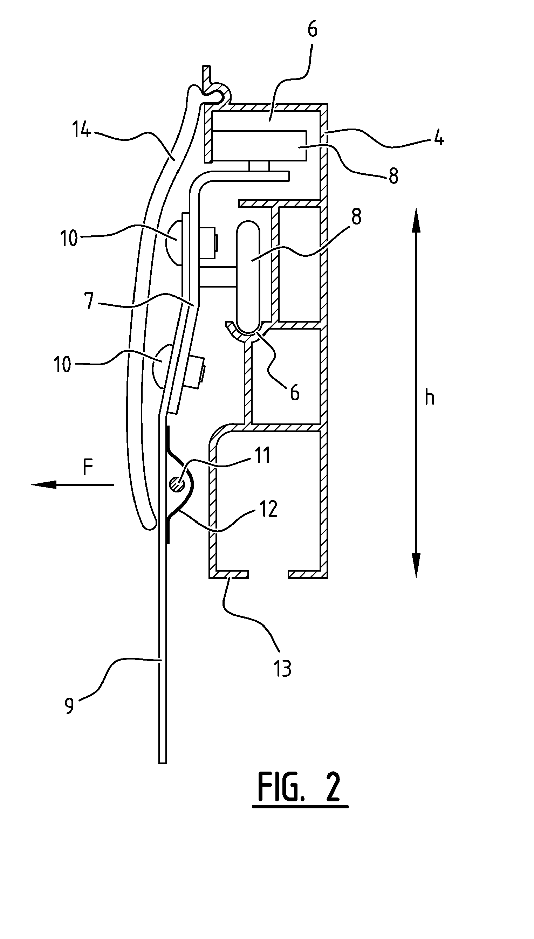

Figure 2 shows a cross-section of load container 2 at the position of the upper support beam 4. Support beam 4 is provided with rails 6. Two rails 6 are provided in support beam 4 in the example of figure 2. Rails 6 are formed here such that wheels 8 of carriages 7 can roll in rails 6 in the longitudinal direction of support beam 4. It will be apparent that carriages 7 and support beam 4 as shown in figure 2 show only one of the many options for carriages 7 for suspending a tarpaulin. A tarpaulin 9 is suspended from carriages 7. Tarpaulin 9 is connected to carriages 7 via fastening means 10. Two fastening means per carriage are shown in the example of figure 2, these fastening means being screws or rivets with which tarpaulin 9 is connected to carriage 7. By suspending tarpaulin 9 in this or similar manner via carriages 7 from a support beam 4 with rails 6 the tarpaulin 9 can be slid open and closed through travel of the carriages in support beam 4. Travel of carriages 7 toward each other will have the result that the tarpaulin 9 located between carriages 7 will bend outward in the manner of a concertina (outward is to the left in figure 2, away from support beam 4). Access can thus be provided to loading space 1.

Tarpaulin 9 is provided with a reinforcing line 11. Reinforcing line 11 is connected to tarpaulin 9 such that a movement of reinforcing line 11 is possible in the longitudinal direction of reinforcing line 11, while movements transversely of reinforcing line 11 are prevented. A holder 12 is provided for this purpose on tarpaulin 9, which holder 12 extends parallel to support beam 4.

Reinforcing line 11 is preferably placed below fastening means 10 and above the underside 13 of support beam 4. Reinforcing line 11 further preferably extends parallel to support beam 4. This specific placing option has several effects. Because reinforcing line 11 is placed above the underside 13 of support beam 4, tensioning of the reinforcing line will ensure that tarpaulin 9 is held firmly relative to support beam 4 (which is rigid). This means that, when a force F is applied to the tarpaulin somewhere between two carriages 7, the outward movement of the tarpaulin and reinforcing line 11 relative to support beam 4 is minimal. This makes access to loading space 1 appreciably more difficult.

Reinforcing line 11 imparts an extra rigidity to tarpaulin 9. This extra rigidity makes it more difficult to open the tarpaulin. Because reinforcing line 11 is placed under fastening means 10, reinforcing line 11 will be in a relatively low position relative to a rubber cover 14. Rubber cover 14 is connected to the top of support beam 4 and extends over carriages 7 and the upper edge of tarpaulin 9 in order to protect these elements from rain and wind. When the tarpaulin is opened, tarpaulin 9 must push rubber cover 14 at least partially aside, or tarpaulin 9 must fold away from support beam 4 under rubber cover 14. Because reinforcing line 11 is placed relatively low in relation to rubber cover 14 (because reinforcing line 11 is placed under fastening means 10), opening of tarpaulin 9 remains relatively simple.

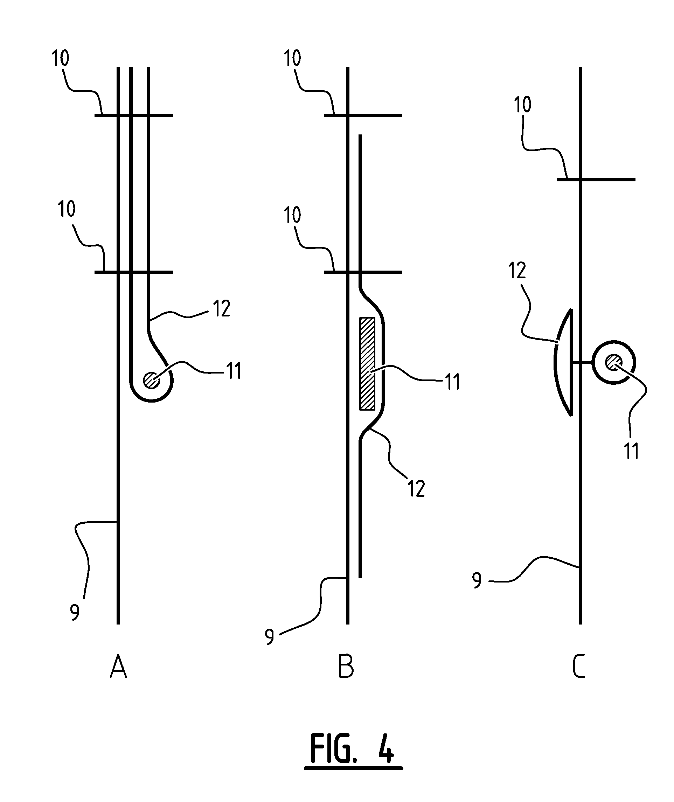

Reinforcing line 11 is preferably held fixedly in a holder 12 which is attached to the tarpaulin. Holder 12 can be attached to the tarpaulin by welding, by adhesion or via fastening means such as screws or rivets. Figure 4 shows different embodiments of such a holder 12.

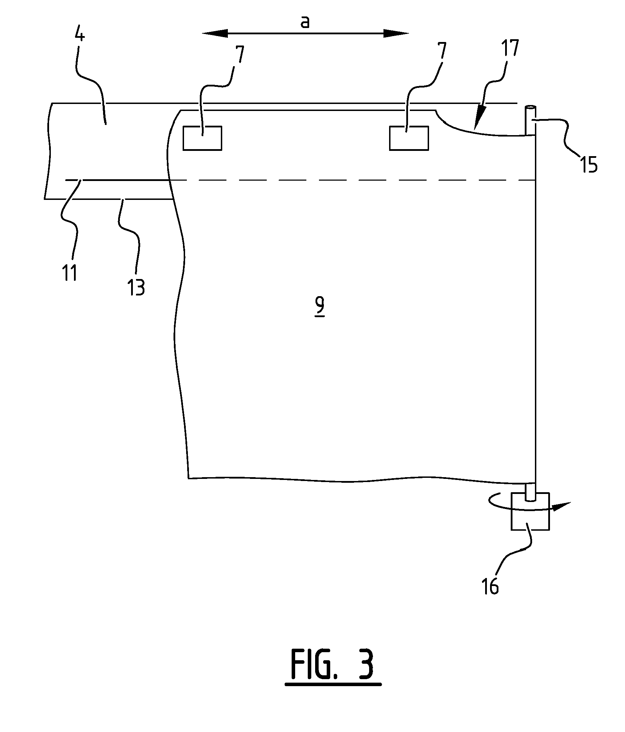

Figure 3 shows a frontal view of the right upper corner of the system for closing a side wall. The figure shows here the upper support beam 4 from which a tarpaulin 9 is suspended via carriages 7. Tarpaulin 9 is connected to a lateral support 15 with which tarpaulin 9 can be tensioned for the purpose of closing the loading space. Tarpaulin 9 typically comprises a cut-away portion 17 at the position of lateral support 15. Cut-away portion 17 is shaped so as to simplify tensioning of tarpaulin 9 onto lateral support 15. This is because without cut-away portion 17 the tarpaulin would crease and deform on the upper side. The lateral support can be formed as a roll onto which tarpaulin 9 can be partially wound. Reinforcing line 11 extends under carriages 7 and above the lower side 13 of support beam 4. Because reinforcing line 11 is situated under carriages 7, reinforcing line 11 can run in one straight line to lateral support 15. This would not be possible if reinforcing line 11 were placed (through cut-away portion 17) at the position of the upper edge of tarpaulin 9. A tensioning mechanism 16 is mounted on roll 15. In the example of figure 3 this tensioning mechanism allows rotation of roll 15 on its axis such that tarpaulin 9 and reinforcing line 11 are wound thereon. Rotation of roll 15 at a predetermined angle will result here in tightening of the tarpaulin and reinforcing line 11 with a predetermined distance. This distance generates the pulling force on the tarpaulin and on reinforcing line 11 which depends on the elastic deformability of respectively the tarpaulin and the reinforcing line. Tarpaulin 9 can hereby be firmly tensioned via tensioning mechanism 16 and reinforcing line 11 can be pulled taut between the lateral supports.

In order to make easy access to the loading space more difficult the intermediate distance between adjacent wheels 7 (this distance is indicated in figure 3 with reference numeral A) is no greater than four times the height between the underside 13 of support beam 4 and fastening means 10 (indicated with reference numeral H in figure 2). Referred to here is the upper of the different fastening means 10. The upper of the fastening means 10 is also being referred to when reinforcing line 11 is defined as being placed under fastening means 10. In specific terms this means that, if in the example of figure 2 the reinforcing line 11 were to be placed between the two fastening means 10, it would still be deemed as being under fastening means 10 because the reinforcing line is then below the upper of the fastening means 10.

Figure 4 shows different embodiments of a reinforcing line 11 and different embodiments of holders 12 for holding reinforcing line 11 fixedly relative to tarpaulin 9. In figure 4A holder 12 is formed by a further piece of tarpaulin material which is folded back on itself whereby an opening is created at the position of the fold, in which opening the reinforcing line 11 can be placed. This fold is then attached to the upper side of the tarpaulin. This attachment can be a combination of welding, adhesion or fastening means such as screws or rivets. The additional fold 12 preferably extends over the full length, or in any case over substantially the full length of the tarpaulin. At the position of the carriages the additional fold 12 is hereby preferably also fixed to the carriages by means of fastening means 10. The fold 12, which in the exemplary embodiment of figure 4A forms the holder of reinforcing line 11, is hereby connected firmly to the tarpaulin. Reinforcing line 11 is formed in figure 4A by a cable of substantially circular cross-section. This cable can be a metal cable of solid material or can be a stranded steel wire (which typically has a greater flexibility). Because the steel cable is confined in a fold, the steel cable cannot move in a direction transversely of its length relative to the tarpaulin. The cable can however slide in and out of the fold and can hereby thus move in its longitudinal direction relative to the tarpaulin.

Figure 4B shows an alternative embodiment wherein holder 12 is formed as a strip of tarpaulin connected at the top and bottom of the strip to tarpaulin 9 such that a space is created in the middle of the strip between the tarpaulin and the strip 12. Strip 12 can be connected to the tarpaulin here by welding, adhesion and other fastening means. Strip 12 preferably extends over substantially the whole length of the tarpaulin. Created via strip 12 is a sleeve in which a reinforcing line 11 can be placed. In the embodiment as shown in figure 4B the reinforcing line is formed by a belt. A belt is defined here as a winding material of substantially elongate cross-section. Belt 11 can be a metal belt or a plastic belt. Because belt 11 is in a sleeve, it can move in its longitudinal direction relative to tarpaulin 9, but movements transversely of the longitudinal direction of the belt are prevented. The advantage of a belt over a cable with the same cross-sectional area is that the belt pleats together with tarpaulin 9 more easily. This is an advantage particularly during opening of the tarpaulin. The belt, just as a cable, will further be suitable as reinforcing line because it can be tensioned in simple manner between lateral supports 15. In figure 4B holder 12 is connected at the position of the carriages to one of the fastening means 10.

Figure 4C shows a further embodiment of a holder 12. In the embodiment of figure 4C an eyelet is connected to tarpaulin 9 as holder 12 for reinforcing line 11. Such an eyelet 12 can be placed at a regular distance along the tarpaulin. A plurality of eyelets are preferably placed at a maximum spacing of 300 mm, more preferably a maximum spacing of 200 mm, most preferably a maximum spacing of 150 mm. Reducing the intermediate distance between eyelets 12 will improve the connection between reinforcing line 11 and tarpaulin 9. Because reinforcing line 11 is fixed by the eyelets relative to the tarpaulin in a direction transversely of the reinforcing line, attachment of the reinforcing line via eyelets is still considered, even when there is a distance between adjacent eyelets in which reinforcing line 11 is not connected to the tarpaulin, as a connection enabling a relative movement of the reinforcing line only in the longitudinal direction of reinforcing line 11 relative to the tarpaulin. When the intermediate distance between adjacent eyelets 12 is properly chosen, it will not be possible for any appreciable movement to occur between tarpaulin and reinforcing line in a direction transversely of the reinforcing line when the tarpaulin and reinforcing line 11 are tensioned. Reinforcing line 11 can however move through the eyelets in longitudinal direction of the reinforcing line.

On the basis of the above description, the figures and the possible alternatives referred to in the text the skilled person will appreciate that different possible configurations and embodiments can be envisaged to reinforce the system for closing a tarpaulin according to the invention. The description and examples given above will not be limitative for the invention, which is defined in the claims.

## Claims

1. System for closing a side wall of a loading space, which system comprises a support beam which is provided with at least one rail, the system further comprising carriages which are each provided with wheels which are placed so as to roll in the at least one rail, wherein a tarpaulin for closing the side wall is attached to the carriages via fastening means, wherein in closed state the tarpaulin is held fixedly between two lateral supports, wherein a tensioning mechanism is provided at least on one of the lateral supports for tensioning the tarpaulin between the lateral supports, **characterized in that** a reinforcing line is connected to the tarpaulin such that a relative movement of the reinforcing line relative to the tarpaulin is only possible in the longitudinal direction of the reinforcing line, wherein the reinforcing line is placed substantially parallel to the rail and is connected to the two lateral supports so that the reinforcing line is tensionable together with the tarpaulin between the supports, wherein the reinforcing line is positioned at a height located above a lower edge of the support beam.

2. System for closing a side wall of a loading space as claimed in claim 1, wherein the reinforcing line is positioned at a height located below said fastening means.

3. System for closing a side wall of a loading space as claimed in claim 1 or 2, wherein a rubber cover is provided on the support beam which is connected above the carriages to the support beam and which extends over the carriages in order to protect them from wind and rain.

4. System for closing a side wall of a loading space as claimed in any of the foregoing claims, wherein the carriages are placed with a spacing which is a maximum of four times greater than the distance between the fastening means and the underside of the support beam.

5. System for closing a side wall of a loading space as claimed in any of the foregoing claims, wherein the reinforcing line is formed from a material and with a cross-section such that the tensioned reinforcing line allows appreciably less elastic deformation than the tensioned tarpaulin.

6. System for closing a side wall of a loading space as claimed in any of the foregoing claims, wherein the reinforcing line is formed from a metal or plastic material and formed as a cable or as a belt.

7. System for closing a side wall of a loading space as claimed in claim 6, wherein the reinforcing line is formed as a metal cable.

8. System for closing a side wall of a loading space as claimed in claim 6, wherein the reinforcing line is formed as a plastic belt.

9. System for closing a side wall of a loading space as claimed in any of the claims 6-8, wherein a belt is defined as a winding material with an elongate cross-section.

10. System for closing a side wall of a loading space as claimed in any of the foregoing claims, wherein the tarpaulin is provided with a sleeve which extends parallel to the rail and wherein the reinforcing line extends through the sleeve of the tarpaulin such that a relative movement of the reinforcing line relative to the tarpaulin is only possible in the longitudinal direction of the reinforcing line.

11. System for closing a side wall of a loading space as claimed in any of the claims 1-9, wherein the tarpaulin is provided with a plurality of eyelets, which plurality of eyelets are placed parallel to the rail and wherein the reinforcing line extends through the plurality of eyelets such that a relative movement of the reinforcing line relative to the tarpaulin is only possible in the longitudinal direction of the reinforcing line.

12. System for closing a side wall of a loading space as claimed in any of the foregoing claims, wherein the reinforcing line is placed on an inner side of the tarpaulin.

13. System for closing a side wall of a loading space as claimed in any of the foregoing claims, wherein the tensioning mechanism is formed as a roll onto which the tarpaulin and the reinforcing line can be partially wound, wherein winding up generates tension for the purpose of tensioning the tarpaulin.

14. Tarpaulin for application in a system for closing a side wall of a loading space as claimed in any of the foregoing claims, wherein the tarpaulin is provided with a holder for fixedly holding a reinforcing line such that a relative movement of the reinforcing line relative to the tarpaulin is only possible in the longitudinal direction of the reinforcing line.

15. Tarpaulin as claimed in claim 14, further comprising a reinforcing line which extends in the holder.
